(19) **Europäisches Patentamt / European Patent Office / Office européen des brevets**

(11) **EP 4 317 011 A1**

(12) **EUROPEAN PATENT APPLICATION**
published in accordance with Art. 153(4) EPC

(43) Date of publication:
**07.02.2024 Bulletin 2024/06**

(21) Application number: **22775027.0**

(22) Date of filing: **04.03.2022**

(51) International Patent Classification (IPC):
**B65D 65/40** (2006.01)    **B32B 27/00** (2006.01)
**B32B 27/20** (2006.01)    **B65D 33/00** (2006.01)

(52) Cooperative Patent Classification (CPC):
**B32B 27/00; B32B 27/20; B65D 33/00; B65D 65/40**

(86) International application number:
**PCT/JP2022/009487**

(87) International publication number:
**WO 2022/202231 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.03.2021 JP 2021047128**

(71) Applicant: **TOYOBO CO., LTD.**
**Osaka-shi, Osaka 530-0001 (JP)**

(72) Inventors:
• **ISHIMARU, Shintaro**
  **Tsuruga-shi, Fukui 914-8550 (JP)**
• **HARUTA, Masayuki**
  **Tsuruga-shi, Fukui 914-8550 (JP)**

(74) Representative: **Müller-Boré & Partner**
**Patentanwälte PartG mbB**
**Friedenheimer Brücke 21**
**80639 München (DE)**

(54) **LASER-PRINTED PACKAGING BODY**

(57) The present invention is packaging comprising at least one laser printing layer printable by laser irradiation, in which the laser printing layer includes a laser-printed portion printed by laser and a non-printed portion, at least a part of the packaging is sealed by fusion cutting, and the packaging meets the following requirements of (1) to (3). In addition, the present invention provides packaging that has laser printing unaccompanied by peeling off and is formed by fusion-cut sealing with high productivity and economic efficiency. (1) the thickness of the laser printing layer is 5 pm or more and 200 pm or less; (2) the difference in color L* value between the laser-printed portion and the non-printed portion is 1.0 or more and 10 or less; and (3) the fusion-cut sealing strength is 5 N/15 mm or more and 40 N/15 mm or less.

EP 4 317 011 A1

**Description**

TECHNICAL FIELD

The present invention relates to packaging that has a layer printed by laser and is formed by fusion-cut sealing.

BACKGROUND ART

Conventionally, packaging made of plastic films has widely used for distribution goods typified by foods, medicines and industrial products. Packaging has various forms depending on the bag-making method and uses, and one of these is packaging formed by fusion-cut sealing (hereinafter sometimes referred to as fusion-cut bag) (for example, Patent Document 1). Fusion-cut sealing is a technique in which plastic films as materials are stacked and bonded using a hot blade. A number of packaging including fusion-cut bags not only protect the contents but also play a role of displaying (hereinafter sometimes referred to as "printing") information pertaining to product names, production dates, raw materials, and so forth.

In recent years, packaging printed by laser has been disclosed, for example, as described in Patent Document 2. In this technology, a laser printing function is realized by applying (coating) an ink layer containing a coloring material (pigment) that reacts to the laser onto a film that serves as a substrate. However, in a case where it is attempted to apply fusion-cut sealing as a method for making this packaging, there is the possibility that the fusion-cut sealing strength decreases and the bag breaks as the fusion-cut sealing surface (the inner surface of the fusion-cut bag) is coated with a laser printable pigment. When the opposite side (the outer surface of the fusion-cut bag) to the fusion-cut surface is coated with a laser printing pigment in order to avoid this, there is a problem that the laser printing pigment is peeled off. These problems can be solved by laminating a film on the surface coated with a laser printing pigment, but a new problem arises that the number of processes increases and the productivity decreases.

PRIOR ART DOCUMENT

PATENT DOCUMENTS

Patent Document 1: JP-B-6736976
Patent Document 2: JP-B-6268873

SUMMARY OF THE INVENTION

PROBLEMS TO BE SOLVED BY INVENTION

It is an object of the present invention to solve problems of the conventional art such as the foregoing. In other words, an object of the present invention is to provide packaging that has laser printing unaccompanied by peeling off and is formed by fusion-cut sealing with high productivity and economic efficiency.

MEANS FOR SOLVING THE PROBLEMS

The present invention is constituted as follows.

1. Packaging comprising:

at least one laser printing layer printable by laser irradiation,
wherein the laser printing layer includes a laser-printed portion printed by laser and a non-printed portion, at least a part of the packaging is sealed by fusion cutting, and the packaging meets the following requirements of (1) to (3):

(1) a thickness of the laser printing layer is 5 $\mu$m or more and 200 $\mu$m or less;
(2) a difference in color L* value between the laser-printed portion and the non-printed portion is 1.0 or more and 10 or less; and
(3) a fusion-cut sealing strength is 5 N/15 mm or more and 40 N/15 mm or less.

2. The packaging according to 1., wherein either a height or width of printing size in the laser-printed portion is 0.2 mm or more and 100 mm or less.

3. The packaging according to 1. or 2., wherein the laser printing layer is provided over a whole region of a plane of the packaging.

4. The packaging according to any one of 1. to 3., wherein the laser printing layer contains single substances or compounds of one or more selected from the group consisting of bismuth, gadolinium, neodymium, titanium, antimony, tin, aluminum, calcium, and barium as a laser printing pigment.

5. The packaging according to any one of 1. to 4., wherein a resin constituting the laser printing layer is mainly any of polyester, polypropylene, or polyethylene.

EFFECT OF THE INVENTION

According to the present invention, it is possible to provide packaging that has laser printing unaccompanied by peeling off and is formed by fusion-cut sealing with high productivity and economic efficiency.

MODE FOR CARRYING OUT THE INVENTION

Hereinafter, packaging of the present invention will be described.

1. Configuration of Packaging

1.1. Layer Configuration and Thickness

The packaging of the present invention is required to have at least one film layer (laser printing layer) printable by laser irradiation. The laser printing layer has a laser-printed portion printed by laser at least at a part as well as a non-printed portion. In the present invention, it is a preferred form that the laser printing layer is provided over the whole region (in the plane direction) of the packaging. The packaging of the present invention may be provided with a print layer on which characters and patterns other than the printing formed by laser are described in order to improve the design. Necessary or preferred requirements for these layers will be described later.

In the packaging of the present invention, fusion-cut sealing performance may be imparted to the laser printing layer or a layer having fusion-cut sealing performance may be provided separately from the laser printing layer in order to meet the prescription for fusion-cut sealing strength. The requirements for exerting fusion-cut sealing strength will be described later.

The packaging of the present invention may be further provided with an anchor coat layer laminated on the substrate layer or adhesive layer and an overcoat layer laminated on the gas barrier layer, if necessary. By providing these layers, the gas barrier properties and scratch resistance of the packaging can be improved.

The thickness of the film layer constituting the packaging (hereinafter, referred to as the thickness of the packaging in some cases) is not particularly limited, but is preferably 5 um or more and 300 um or less. It is not preferred that the thickness of the packaging is thinner than 5 $\mu$m since not only the visual perceptibility of laser printing may be diminished but also the mechanical strength and fusion-cut sealing strength may decrease. Meanwhile, it is not preferred that the thickness of the packaging exceeds 300 um since heat transfer in the film thickness direction is insufficient at the time of fusion-cut sealing and defective fusion cutting is likely to be caused. The thickness of the packaging is more preferably 10 um or more and 295 um or less, still more preferably 15 um or more and 290 um or less.

The thickness of the laser printing layer constituting the packaging of the present invention is required to be 5 um or more and 200 um or less. When the thickness is less than 5 um, the visual perceptibility of laser printing may be diminished even when the concentration of the laser printing pigment described later is increased. Meanwhile, it is not preferred that the thickness of the printing layer exceeds 200 $\mu$m since the above-described defective fusion cutting is likely to be caused. The thickness of the laser printing layer is more preferably 10 $\mu$m or more and 195 $\mu$m or less, still more preferably 15 $\mu$m or more and 190 $\mu$m or less.

In order to improve properties such as printability and lubricity of the surface, all the layers constituting the packaging of the present invention can be provided with layers subjected to corona treatment, coating treatment, flame treatment, and the like, and these layers can be provided arbitrarily within the scope of the requirements of the present invention.

1.2. Laser Printing Layer

1.2.1. Types of Laser Printing Pigments, Amounts Thereof Added, and Methods for Adding Same

So that a printing layer making up the present invention may be made laser-printable, laser printing pigment having functionality permitting change in color when acted on by laser irradiation must be added thereto. The plastics that make up packaging usually almost do not react to laser light, and cannot be thus printed by laser irradiation. Laser printing pigment can be made to undergo excitation by the energy from laser light, making it possible for printing to take place as a result of carburization of the surrounding plastic. Furthermore, besides the plastic carburization effect, there are laser printing pigments which, depending on the type thereof, may themselves change color and become black. Simple or complex action of this carburization effect and/or laser printing pigment color change effect makes it possible for printing to be carried out at the printing layer. From the standpoint of printing density, it is preferred that laser printing pigment(s) having both the plastic carburization effect and the effect whereby it itself changes color be selected.

As specific types of laser printing pigments, any of bismuth, gadolinium, neodymium, titanium, antimony, tin, aluminum, calcium, and barium-whether present alone or in oxide form-may be cited. Among these, titanium oxide, calcium carbonate, bismuth trioxide, antimony trioxide, and barium sulfate are preferred, and titanium oxide, calcium carbonate and bismuth trioxide are more preferred. Furthermore, it is preferred that laser printing pigment particle diameter be 0.1 um or more and 10 um or less. When laser printing pigment particle diameter is less than 0.1 um, there is a possibility that change in color when irradiated by a laser will no longer be adequate. When the particle size of the laser printing pigment exceeds 10 $\mu$m, there is a concern that clogging of the filter is accelerated in the extrusion process when a film is formed. It is more preferred that laser printing pigment particle diameter be 1 um or more and 9 um or less, and still more preferred that this be 2 um or more and 8 um or less.

The amount of the laser printing pigment added to the laser printing layer is preferably 0.05% by mass or more and 50% by mass or less. When the amount of pigment added is less than 0.05% by mass, this is not preferred since the printing density produced by the laser will no longer be adequate. When the amount of pigment added exceeds 50% by mass, the amount (volume) of carbonized plastic is relatively decreased, and this may also result in insufficient printing density. The amount of laser printing pigment added is more preferably 0.1% by mass or more and 49% by mass or less, still more preferably 0.15% by mass or more and 48% by mass or less, particularly preferably 0.2% by mass or more and 47% by mass or less. In a case where the laser printing layer is multiple layers, the amount of the laser printing pigment added to all the laser printing layers can be determined by proportionally dividing the thickness ratio among the respective layers and the amount of the laser printing pigment added.

As the method for blending the laser printing pigment, the laser printing pigment can be added at any stage during the manufacture of the resin to be a raw material for the laser printing layer or the film to be the laser printing layer. For example, with regard to step(s) during manufacture of resin(s), methods in which a vented kneader extruder is used to cause plastic raw material and a slurry in which particles thereof are dispersed in solvent to be blended, methods in which a kneader extruder is used to cause dried particles thereof and plastic resin to be blended (made into masterbatch), and so forth may also be cited. Among these, methods in which masterbatch that contains laser printing pigment is used as film raw material are preferred.

1.2.2. Types of Plastic

The type of plastic constituting the laser printing layer of the present invention is not particularly limited, and any type of plastic can be freely used without departing from the gist of the present invention. As the type of plastic (resin), polyester, polyolefin, polyamide, and the like may be cited as examples.

As polyester, polyethylene terephthalate (PET), polybutylene terephthalate (PBT), polyethylene naphthalate (PEN), polytrimethylene terephthalate (PTT), polybutylene naphthalate (PBN), polylactic acid (PLA), polyethylene furanoate (PEF), polybutylene succinate (PBS), and so forth may be cited as examples. Moreover, in addition to the polyesters cited at the foregoing examples, it is also possible to use modified polyesters in which the monomer(s) at such acid site and/or diol site are altered. As acid-site monomer, isophthalic acid, 1,4-cyclohexanedicarboxylic acid, 2,6-naphthalenedicarboxylic acid, orthophthalic acid, and other such aromatic dicarboxylic acids, adipic acid, azelaic acid, sebacic acid, decanedicarboxylic acid, and other such aliphatic dicarboxylic acids, and alicyclic dicarboxylic acids may be cited as examples. Furthermore, as diol-site monomer, neopentyl glycol, 1,4-cyclohexanedimethanol, diethylene glycol, 2,2-diethyl-1,3-propanediol, 2-n-butyl-2-ethyl-1,3-propanediol, 2,2-isopropyl-1,3-propanediol, 2,2-di-n-butyl-1,3-propanediol, hexanediol, 1,4-butanediol, and other such long-chain diols, hexanediol and other such aliphatic diols, bisphenol A and other such aromatic-type diols, and so forth may be cited as examples. Moreover, as component making up polyester, this may include polyester elastomer(s) comprising $\varepsilon$-caprolactone, tetramethylene glycol, and/or the like. Regarding the polyester raw materials cited above, it is possible to use raw material in which a plurality of types of homopolyester, each of which has polymerized therein one types of carboxylic acid monomer and one types of diol monomer, are mixed (dry blended); and it is possible to use raw material in which two or more types of carboxylic acid monomer and/or two or more types of diol monomer are copolymerized. Furthermore, it is possible to use raw material in which homopolyester(s) and copolymerized polyester(s) are mixed.

While there is no particular limitation with respect to the intrinsic viscosity (IV) of polyester serving as raw material, it being possible for this be freely chosen as desired, it is preferred that this be 0.5 dL/g to 1.2 dL/g. When IV is less than 0.5 dL/g, since this causes molecular weight of the raw material to be too low, this will increase the tendency for fracture to occur during film formation, and increases the tendency for tensile fracture strength of the display body to fall below 40 MPa, and for other such problems to occur. On the other hand, when IV exceeds 1.2 dL/g, this is not preferred, since it will cause the resin pressure at the time of extruding operation(s) during film formation to be too high, which would tend to cause occurrence of deformation of filter(s) and so forth. It is more preferred that IV be 0.55 dL/g or more and 1.15 dL/g or less, and still more preferred that this be 0.6 dL/g or more and 1.1 dL/g or less.

As polyolefin, polypropylene (PP), polyethylene (PE), and so forth may be cited as examples. Where polypropylene is employed, there is no particular limitation with respect to stereoregularity, it being possible for this to be isotactic, syndiotactic, and/or atactic, it being possible for these to be present therein in any desired fractional percentage(s). Furthermore, where polyethylene is employed, there is no particular limitation with respect to the density (degree of branching) thereof, it being possible for this to be high density (HDPE), linear low density (LLDPE), and/or low density (LDPE). Furthermore, besides the foregoing homopolymers, raw materials in which two or more different types of monomers are copolymerized may be used; examples of monomers that may be used for copolymerization which may be cited including ethylene, $\alpha$-olefins, and so forth; examples of $\alpha$-olefins which may be cited including propylene, 1-butene, 1-pentene, 1-hexene, 1-heptene, 1-octene, 1-nonene, 1-decene, 4-methyl-1-pentene, 4-methyl-1-hexene, and so forth. The type of copolymerization may be random copolymerization and/or block copolymerization. Moreover, besides the examples of raw materials cited above, polyolefin elastomer and/or ionomer may be employed.

While there is no particular limitation with respect to the melt flow rate (MFR) of polyolefin serving as raw material, it being possible for this be freely chosen as desired, it is preferred that this be 1 g/10 min to 10 g/10 min. When MFR is less than 1 g/10 min, this is not preferred since it would cause the melt viscosity of the raw material to be too high, as a result of which the resin pressure at the time of extruding operation(s) during film formation would be too high, which would tend to cause occurrence of deformation of filter(s) and so forth. On the other hand, when MFR exceeds 10 g/10 min, since this would cause molecular weight to become extremely low, there is a possibility that it would increase the tendency for fracture to occur during film formation, and/or that it would reduce resistance to blocking. It is more preferred that MFR be 2 g/10 min or more and 8 g/10 min, and still more preferred that this be 3 g/10 min or more and 7 g/10 min.

As polyamide, any one type of resin-or a raw material mixture in which two or more types thereof are mixed-selected from among polycaproamide (nylon 6), polyhexamethylene adipamide (nylon 66), caprolactam/lauryl lactam copolymer (nylon 6/12), caprolactam/hexamethylene diammonium adipate copolymer (nylon 6/66), ethylene ammonium adipate/hexamethylene diammonium adipate/hexamethylene diammonium sebacate copolymer (nylon 6/66/610), polymers of meta-xylylenediamine and adipic acid (MXD-6), hexamethylene isophthalamide/terephthalamide copolymer (amorphous nylon), and so forth may be cited as examples. Furthermore, an adhesion improvement layer may be provided at the surface of a film comprising any of the examples of plastics cited above. As material for the adhesion improvement layer, acrylic, a water-soluble or water-dispersible polyester, a hydrophobic polyester in which acrylic is graft copolymerized, and so forth may be cited as examples.

It is preferred that the relative viscosity (RV) of polyamide serving as raw material be 2.2 or more and 4 or less. When RV is less than 2.2, crystallization rate may be too high, and there may be a tendency for fracture or the like to occur when stretching is carried out during film forming operations. On the other hand, when RV exceeds 4, this is not preferred, as the load on the extruder will be too high, and there will be increased tendency for occurrence of filter deformation and the like. It is more preferred that RV be 2.3 or more and 3.9 or less, and still more preferred that this be 2.4 or more and 3.8 or less. The "relative viscosity" in the context of the present invention means the value measured at 25°C using a solution in which 0.5 g of polymer has been dissolved in 50 ml of 97.5% sulfuric acid.

As the type of plastic constituting the laser printing layer, polyester, polypropylene, and polyethylene are preferred among those cited above from the viewpoint of mechanical strength, film forming stability, and laser printing performance.

The content of the plastic that makes up the laser printing layer is preferably 50% by mass or more and 99.95% by mass or less. It is not preferred that the plastic content is less than 50% by mass since the tensile fracture strength, which will be described later, may be likely to be less than 40 MPa. It is not preferred that the plastic content exceeds 99.95% by mass since the content of laser printing pigment is relatively less than 0.05% by mass and the difference in color L* value between the printed portion and the non-printed portion is likely to be less than 1.0. The plastic content is more preferably 51% by mass or more and 99.9% by mass or less, still more preferably 52% by mass or more and 99.85% by mass, particularly preferably 53% by mass or more and 99.8% by mass or less. In a case where the laser printing layer is multiple layers, the plastic content in all the laser printing layers can be determined by proportionally dividing the thickness ratio among the respective layers and the plastic content.

### 1.2.3. Additives Other than Laser Printing Pigment

Any of various additives, e.g., waxes, antioxidants, anti-static agents, crystal nucleating agents, viscosity-lowering agents, thermal stabilizers, colorant pigments, antistaining agents, ultraviolet light absorbers, and/or the like, may be added as necessary within laser printing layer(s) making up the packaging of the present invention. Furthermore, where a laser printing layer is a surfacemost layer, it is preferred that microparticles serving as a lubricant for improving lubricity be added thereto. Any desired microparticles may be chosen. For example, as inorganic-type microparticles, silica, alumina, kaolin, white lead, titanium white, zeolite, zinc oxide, lithopone, and so forth may be cited; as organic-type microparticles, acrylic particles, melamine particles, silicone particles, crosslinked polystyrene particles, carbon black, iron oxide, and so forth may be cited. Average particle diameter of microparticles when measured by means of a Coulter counter may be chosen as appropriate as needed within the range 0.05 um to 3.0 um. It is preferred that the lower limit of the range in values for the fractional amount of microparticles present therein be 0.01% by mass, more preferred that this be 0.015% by mass, and still more preferred that this be 0.02% by mass. Below 0.01% by mass, there may be reduction in lubricity. It is preferred that the upper limit of the range in values be 1% by mass, more preferred that this be 0.2% by mass, and still more preferred that this be 0.1% by mass. It is not preferred that the upper limit exceeds 1% by mass since there may be problems such as reduction in smoothness of the surface and faint printability may occur.

As method for causing particles to be blended within the laser printing layer, these may be added at any desired step(s) during manufacture of the plastic raw material, and it is possible to adopt a method that is the same as at the foregoing "1.2.1. Types of Laser Printing Pigments, Amounts Thereof Added, and Methods for Adding Same".

### 1.3. Fusion-Cut Sealing Layer

In the packaging of the present invention, the laser printing layer may also serve as a fusion-cut sealing layer or a fusion-cut sealing layer may be provided separately from the laser printing layer as described in the "1.1. Layer Configuration and Thickness". Here, the layer that exerts the fusion-cut sealing strength described later (including the laser printing layer) is described as the fusion-cut sealing layer. The fusion-cut sealing layer is not particularly limited as long as it exhibits fusion-cut sealing properties, and conventionally known ones can be arbitrarily used without departing from the gist of the present invention. As the type of plastic that makes up the fusion-cut sealing layer, polyester and polyolefin may be cited as examples.

As polyester, polyethylene terephthalate (PET), polybutylene terephthalate (PBT), polyethylene naphthalate (PEN), polytrimethylene terephthalate (PTT), polybutylene naphthalate (PBN), polylactic acid (PLA), polyethylene furanoate (PEF), polybutylene succinate (PBS), and so forth may be cited as examples. Moreover, in addition to the polyesters cited at the foregoing examples, it is also possible to use modified polyesters in which the monomer(s) at such acid site and/or diol site are altered. As acid-site monomer, isophthalic acid, 1,4-cyclohexanedicarboxylic acid, 2,6-naphthalenedicarboxylic acid, orthophthalic acid, and other such aromatic dicarboxylic acids, adipic acid, azelaic acid, sebacic acid, decanedicarboxylic acid, and other such aliphatic dicarboxylic acids, and alicyclic dicarboxylic acids may be cited as examples. Furthermore, as diol-site monomer, neopentyl glycol, 1,4-cyclohexanedimethanol, diethylene glycol, 2,2-diethyl-1,3-propanediol, 2-n-butyl-2-ethyl-1,3-propanediol, 2,2-isopropyl-1,3-propanediol, 2,2-di-n-butyl-1,3-propanediol, hexanediol, 1,4-butanediol, and other such long-chain diols, hexanediol and other such aliphatic diols, bisphenol A and other such aromatic-type diols, and so forth may be cited as examples. Moreover, as component making up polyester, this may include polyester elastomer(s) comprising ε-caprolactone, tetramethylene glycol, and/or the like. Regarding the polyester raw materials cited above, it is possible to use raw material in which a plurality of types of homopolyester, each of which has polymerized therein one types of carboxylic acid monomer and one types of diol monomer, are mixed (dry blended); and it is possible to use raw material in which two or more types of carboxylic acid monomer and/or two or more types of diol monomer are copolymerized. Furthermore, it is possible to use raw material in which homopolyester(s) and copolymerized polyester(s) are mixed. Copolymerized polyester has a low melting point and a low degree of crystallinity, and can be suitably used in order to exert fusion-cut sealing strength.

As polyolefin, polypropylene (PP), polyethylene (PE), and so forth may be cited as examples. Where polypropylene is employed, there is no particular limitation with respect to stereoregularity, it being possible for this to be isotactic, syndiotactic, and/or atactic, it being possible for these to be present therein in any desired fractional percentage(s). Furthermore, where polyethylene is employed, there is no particular limitation with respect to the density (degree of branching) thereof, it being possible for this to be high density (HDPE), linear low density (LLDPE), and/or low density (LDPE). Furthermore, besides the foregoing homopolymers, raw materials in which two or more different types of monomers are copolymerized may be used; examples of monomers that may be used for copolymerization which may be cited including ethylene, α-olefins, and so forth; examples of α-olefins which may be cited including propylene, 1-butene, 1-pentene, 1-hexene, 1-heptene, 1-octene, 1-nonene, 1-decene, 4-methyl-1-pentene, 4-methyl-1-hexene, and so forth. The type of copolymerization may be random copolymerization and/or block copolymerization. Moreover, besides the examples of raw materials cited above, polyolefin elastomer and/or ionomer may be employed. Polyolefin with low stereoregularity or copolymerized polyolefin has a low melting point and a low degree of crystallinity, and can be suitably used in order to exert fusion-cut sealing strength.

While there is no particular limitation with respect to the melt flow rate (MFR) of polyolefin serving as raw material, it being possible for this be freely chosen as desired, it is preferred that this be 1 g/10 min to 10 g/10 min. When MFR is less than 1 g/10 min, this is not preferred since it would cause the melt viscosity of the raw material to be too high, as a result of which the resin pressure at the time of extruding operation(s) during film formation would be too high, which would tend to cause occurrence of deformation of filter(s) and so forth. On the other hand, when MFR exceeds 10 g/10 min, since this would cause molecular weight to become extremely low, there is a possibility that it would increase the tendency for fracture to occur during film formation, and/or that it would reduce resistance to blocking. It is more preferred that MFR be 2 g/10 min or more and 8 g/10 min, and still more preferred that this be 3 g/10 min or more and 7 g/10 min.

A lubricant can also be contained in the fusion-cut sealing layer in order to improve the lubricity, and the contained concentration is preferably 100 ppm or more and 2000 ppm or less. It is not preferred that the concentration of lubricant falls below 100 ppm since the lubricity deteriorates. The lubricant concentration may exceed 2000 ppm, but the effect of improving lubricity more than this cannot be expected. The lubricant concentration is more preferably 200 ppm or more and 1900 ppm or less, still more preferably 300 ppm or more and 1800 ppm or less.

In order to improve wettability and lubricity of the surface, the fusion-cut sealing layer can be provided with a layer that has undergone corona treatment, coating treatment, flame treatment, and the like, and may be provided with the layer arbitrarily without departing from the requirements of the present invention.

A film formed by any of unstretching, uniaxial stretching, or biaxial stretching using the plastics of the above-mentioned types as raw materials can be arbitrarily used.

1.4. Other Layers

The packaging of the present invention may include layers other than the laser printing layer and fusion-cut sealing layer described above. The gas barrier layer (transparent, opaque) and print layer described in the "1.1. Layer Configuration and Thickness" will be explained.

1.4.1. Gas Barrier Layer

The gas barrier layer that can be arbitrarily laminated in the packaging of the present invention is preferably composed of an inorganic thin film containing a metal or metal oxide as a main component. In addition to the gas barrier composed of the inorganic thin film, the laminated body may further include an anchor coat layer provided under the inorganic thin film layer (between the plastic film and the inorganic thin film) and an overcoat layer provided above the inorganic thin film layer. By providing these layers, improvement in close contact properties to the gas barrier layer, improvement in gas barrier properties, and the like can be expected.

The type of raw material for the gas barrier layer is not particularly limited, and conventionally known materials can be used, the raw material can be appropriately selected according to the purpose in order to satisfy the desired gas barrier properties and the like. Examples of the type of raw material for the gas barrier layer include metals such as silicon, aluminum, tin, zinc, iron, and manganese, and inorganic compounds containing one or more of these metals, and examples of the inorganic compounds include oxides, nitrides, carbides, and fluorides. These inorganic substances or inorganic compounds may be used singly or in combination.

In a case where the gas barrier layer is transparent, silicon oxide ($SiOx$) and aluminum oxide ($AlOx$) can be used singly (simple substances) or in combination (binary substances). In a case where the component of the inorganic compound consists of a binary substance of silicon oxide and aluminum oxide, the content of aluminum oxide is preferably 20% by mass or more and 80% by mass or less, more preferably 25% by mass or more and 70% by mass or less. It is not preferred that the content of aluminum oxide is 20% by mass or less since the density of the gas barrier layer may decrease and the gas barrier properties may decrease. It is not preferred that the content of aluminum oxide is 80% by mass or more since the flexibility of the gas barrier layer may decrease, cracking is likely to occur, and as a result, the gas barrier properties may decrease.

The oxygen/metal element ratio in the metal oxide used for the gas barrier layer is preferably 1.3 or more and less than 1.8 since there is little variation in gas barrier properties and excellent gas barrier properties can always be acquired. The oxygen/metal element ratio can be determined by measuring the amounts of the respective elements of oxygen and metal by X-ray photoelectron spectroscopy (XPS) and calculating the oxygen/metal element ratio.

The thickness of the gas barrier layer that can be preferably used in the packaging of the present invention is preferably 2 nm or more and 100 nm or less in a case where a metal or metal oxide is vapor-deposited and used as a gas barrier layer. It is not preferred that the thickness of this layer is less than 2 nm since the gas barrier properties are likely to decrease. It is not preferred that the thickness of this layer exceeds 100 nm since there is no corresponding effect of improving gas barrier properties and the manufacturing cost increases. The thickness of the inorganic thin film layer is more preferably 5 nm or more and 97 nm or less, still more preferably 8 nm or more and 94 nm or less.

In a case where a metal foil is used as the gas barrier layer, the thickness of the metal foil is preferably 3 um or more and 100 um or less. It is not preferred that the thickness of this layer is less than 3 um since the gas barrier properties are likely to decrease. It is not preferred that the thickness of this layer exceeds 100 nm since there is no corresponding effect of improving gas barrier properties and the manufacturing cost increases. The thickness of the inorganic thin film layer (metal foil) is more preferably 5 um or more and 97 um or less, still more preferably 8 um or more and 94 um or less.

In a case where the gas barrier layer is opaque, the gas barrier layer can be formed by pasting aluminum foil or vapor-depositing aluminum. The thickness of the aluminum foil is preferably 1 um or more and 100 um or less.

The gas barrier laminated body thus provided preferably has a water vapor transmission rate of 0.05 $[g/(m^2{\cdot}d)]$ or more and 4 $[g/(m^2{\cdot}d)]$ or less in an environment having a temperature of 40°C and a relative humidity of 90% RH. It is not preferred that the water vapor transmission rate exceeds 4 $[g/(m^2{\cdot}d)]$ since the shelf life of the contents is shortened in a case where the laminated body is used as packaging containing the contents. It is preferred that the water vapor transmission rate is less than 0.05 $[g/(m^2{\cdot}d)]$ since the gas barrier properties are enhanced and the shelf life of the contents is extended, but the lower limit of water vapor transmission rate is 0.05 $[g/(m^2{\cdot}d)]$ in the current technical level. When the lower limit of water vapor transmission rate is 0.05 $[g/(m^2{\cdot}d)]$, it can be said that it is practically sufficient. The upper limit of water vapor transmission rate is preferably 3.8 $[g/(m^2{\cdot}d)]$, more preferably 3.6 $[g/(m^2{\cdot}d)]$.

The gas barrier laminated body preferably has an oxygen transmission rate of 0.05 $[cc/(m^2{\cdot}d{\cdot}atm)]$ or more and 4 $[cc/(m^2{\cdot}d{\cdot}atm)]$ or less in an environment having a temperature of 23°C and a relative humidity of 65% RH. It is not preferred that the oxygen transmission rate exceeds 4 $[cc/(m^2{\cdot}d{\cdot}atm)]$ since the shelf life of the contents is shortened. It is preferred that the oxygen transmission rate is less than 0.05 $[cc/(m^2{\cdot}d{\cdot}atm)]$ since the gas barrier properties are enhanced and the shelf life of the contents is extended, but the lower limit of oxygen transmission rate is 0.05 $[cc/(m^2{\cdot}d{\cdot}atm)]$ in the current technical level. When the lower limit of oxygen transmission rate is 0.05 $[cc/(m^2{\cdot}d{\cdot}atm)]$, it can be said that it is practically sufficient. The upper limit of oxygen transmission rate is preferably 3.8 $[cc/(m^2{\cdot}d{\cdot}atm)]$, more preferably 3.6 $[cc/(m^2{\cdot}d{\cdot}atm)]$.

An overcoat layer can also be provided on the gas barrier laminated body described above for the purpose of improving scratch resistance, further improving gas barrier properties, and the like.

The type of overcoat layer is not particularly limited, but conventionally known materials, such as compositions containing urethane-based resins and silane coupling agents, compounds containing organosilicon and hydrolysates thereof, water-soluble polymers having hydroxyl or carboxyl groups, can be used, and the materials can be appropriately selected according to the purpose in order to satisfy the desired gas barrier properties and the like.

For the purpose of imparting antistatic properties, ultraviolet absorbency, coloring, thermal stability, lubricity and the like, one or more of various additives may be added to the overcoat layer as long as the object of the present invention is not impaired, and the types and amounts of various additives can be appropriately selected according to the desired purpose.

1.4.2. Print Layer

In addition to printing by laser irradiation, the packaging of the present invention may be provided with characters and patterns for the purpose of improving design. As materials for forming these characters and patterns, known materials such as ink for gravure printing and ink for flexographic printing can be used. Regarding the number of print layer(s), there may be one such layer or there may be a plurality of such layers. So as to be able to improve design properties by printing a plurality of colors, it is preferred that there be print layer(s) that comprise a plurality of layers. There will be no objection regardless of whether print layer(s) are disposed at surfacemost layer(s) or at intermediate layer(s).

2. Properties of Packaging

2.1. Difference in Color L* Value (Non-Printed Portion - Printed Portion)

In the packaging of the present invention, it is required that the absolute value of the difference in color L* value between the printed portion and the non-printed portion (hereinafter sometimes referred to simply as "difference in L* value") be 1.0 or more and 10.0 or less. When this difference is less than 1.0, the color tones of the printed portion and non-printed portion become close to each other, and this makes it difficult to visually recognize the printing. It is not preferred that the difference in L* value exceeds 10.0 since the printing is likely to be visually recognized, but it is necessary to increase the laser irradiation power accordingly, this may cause great damage to the packaging, and problems such as perforation of the packaging are likely to occur. It is more preferred that the difference in L* value be 1.5 or more and 9.5 or less, and still more preferred that this be 2.0 or more and 9.0 or less.

## 2.2. Fusion-Cut Sealing Strength

The packaging of the present invention is required to have a fusion-cut sealing strength of 5 N/15 mm or more and 40 N/15 mm or less. It is not preferred that the sealing strength is less than 5 N/15 mm since the sealed portion is easily peeled off. The sealing strength is more preferably 6 N/15 mm or more, still more preferably 7 N/15 mm or more. It is more preferable as the sealing strength is greater since the sealability of the packaging is enhanced, but the upper limit that can be acquired at present is about 40 N/15 mm. An upper limit of sealing strength of 30 N/15 mm is also sufficient for practical use.

## 2.3. Printing Size

With regard to the printing size formed on the packaging of the present invention by laser, it is preferred that either the height or the width be 0.2 mm or more and 100 mm or less. As it is said that the resolving power of the human eye is on the order of 0.2 mm, when the size of character falls below 0.2 mm, the difference in color L* value is likely to be less than 1.0, making recognition of printing difficult. On the other hand, when the printing size is above 100 mm, while this is preferred inasmuch as it facilitates recognition of printing, this is not preferred since when the printing size is too large it will cause the amount of information written on the packaging to be too small. It is more preferred that the printing size be 0.5 mm or more and 90 mm or less, and still more preferred that this be 1 mm or more and 80 mm or less.

## 2.4. Heat Shrinkage Rate

In the packaging of the present invention, it is preferred that the heat shrinkage rate is -10% or more and 10% or less in at least one arbitrary direction on the plane of the packaging when an arbitrary portion where the innermost layers are not sealed is cut and treated in hot air at 120°C for 30 minutes. It is not preferred that the heat shrinkage rate exceeds 10% since the deformation becomes great when the packaging is placed in a high-temperature environment and the original shape cannot be maintained. It is not preferred that the heat shrinkage rate is less than -10% since this means that the packaging stretches and the packaging cannot maintain its original shape in the same way as when the heat shrinkage rate is high. The heat shrinkage rate of packaging is more preferably -9% or more and 9% or less, still more preferably -8% or more and 8% or less.

## 2.5. Tensile Fracture Strength

In the packaging of the present invention, it is preferred that the tensile fracture strength is 40 MPa or more and 400 MPa when an arbitrary portion not undergone fusion-cut sealing is cut and the tensile fracture strength is measured in at least one arbitrary direction on the plane of the packaging. When the tensile fracture strength is below 40 MPa, this is not preferred, since it will cause the packaging to fracture easily under external tension. It is more preferred that the lower limit of the range in values for tensile fracture strength be 50 MPa, and still more preferred that this be 60 MPa. On the other hand, while a tensile fracture strength that exceeds 400 MPa would be preferred in terms of mechanical strength, the level of the art of the present invention is such that the upper limit of the range in values therefor is 400 MPa. As a practical matter, even where tensile fracture strength is 300 MPa, this will be adequate.

## 3. Manufacturing Conditions

### 3.1. Laser Printing Layer

The laser printing layer constituting the packaging of the present invention can be manufactured by the methods and conditions exemplified below.

#### 3.1.1. Mixing and Supply of Raw Materials

In manufacturing the laser printing layer included in the packaging of the present invention, it is necessary to add the laser printing pigments described in the "1.2.1. Types of Laser Printing Pigments, Amounts Thereof Added, and Methods for Adding Same".
The laser printing pigment is a metal, and thus usually has a higher specific gravity than the resin constituting the film. Causing two or more types of raw materials having different specific gravities to be mixed and fed to an extruder in this fashion is likely to cause occurrence of variation (segregation) in the supply of raw materials. To prevent such variation, it is preferred that agitator(s) be installed at hopper(s) and plumbing immediately above extruder(s), that plumbing (inner piping) be inserted at interior(s) of hopper(s) immediately above extruder(s) filled with base resin and that laser printing pigment be supplied thereby, that tapered collars for lowering granular pressure of raw materials be installed at respective raw material hoppers, and/or that other such strategy or strategies be adopted to carry out melt extrusion.

3.1.2. Melt Extrusion

A laser printing layer may be obtained by causing raw materials supplied in "3.1.1. Mixing and Supply of Raw Materials" to be melt-extruded by extruder(s) to form an unstretched film, and causing this to undergo the prescribed processes indicated below. In the case of laminating a laser printing layer and a fusion-cut sealing layer, it is preferable to laminate these by an extrusion process. As a lamination method, it is preferable to employ a co-extrusion method, and this is a method in which resins, which are raw materials for the respective layers, are each melt-extruded by separate extruders, and joined using a feed block or the like in the middle of the resin flow path. Extrusion lamination can also be employed in which a resin to be the sealing layer is melt-extruded from a slot die and laminated in an arbitrary process from after extrusion of the laser printing layer to winding.

As method for melt extruding resin raw material, known methods may be employed, methods employing extruder(s) equipped with barrel(s) and screw(s) being preferred. It is preferred that a hopper dryer, paddle dryer, or other such dryer or a vacuum dryer be used in advance to cause raw material (polyester or the like) that might otherwise decompose due to the effect of moisture when molten to be dried until the moisture content thereof is 100 ppm or less, more preferably 90 ppm or less, still more preferably 80 ppm or less. After the raw material has been dried in such fashion, the resin that has been melted by extruder(s) is quenched, as a result of which it is possible to obtain unstretched film. With respect to extrusion, this may be carried out by adopting the T die method, tubular method, and/or any other such known method as desired.

By thereafter quenching the film that is molten due to having been extruded, it is possible to obtain unstretched film. As method for quenching molten resin, a method on which the molten resin from the orifice fixture is cast onto a rotating drum where it is quenched and allowed to solidify to obtain a substantially unoriented resin sheet might be favorably adopted. The film serving as a printing layer may be formed by any technique of unstretching; uniaxial stretching (stretching in at least one of the vertical (machine) direction or the horizontal (transverse) direction); biaxial stretching. However, in consideration of mechanical strength, uniaxial stretching is preferred, and biaxial stretching is more preferred. By forming a stretched film, it is possible to prevent a decrease in mechanical strength due to the use of a laser printing pigment and to improve abrasion resistance.

While the description that follows is given with a focus on the sequential biaxial stretching method employing machine direction stretching - transverse direction stretching in which stretching is first carried out in the machine direction and stretching is subsequently carried out in the transverse direction, there is no objection to transverse direction stretching - machine direction stretching in which the order is reversed, as this will merely cause a change in the principal orientation direction. There would moreover be no objection to the simultaneous biaxial stretching method in which stretching in the machine direction and transverse direction are carried out simultaneously.

3.1.3. First (Machine Direction) Stretching

Stretching in the first direction (vertical or machine direction) may be carried out by causing the film to be fed into a machine direction stretching device in which a plurality of groups of rolls are arranged in continuous fashion. In carrying out machine direction stretching, it is preferred that preheating roll(s) be used to carry out preheating of the film. The preheating temperature is set so as to be between Tg and melting point Tm + 50°C, as determined based on the glass transition temperature Tg or melting point (Tm) of the plastic that makes up the film. When the preheating temperature is less than Tg, this is not preferred since stretching will be difficult at the time that stretching in the machine direction is carried out, and there will be a tendency for fracture to occur. It is not preferred the heating temperature is higher than Tm + 50°C since the film is likely to stick to the roll and the film is likely to be wound around the roll.

When film reaches between Tg and Tm + 50°C, stretching in the machine direction is carried out. The stretching ratio in the machine direction should be 1x or more and 5x or less. As 1x would mean that there is no stretching in the machine direction, the stretching ratio in the machine direction should be 1x to obtain film which is uniaxially stretched in the transverse direction, and the stretching ratio in the machine direction should be 1.1x or more to obtain biaxially stretched film. Causing the machine direction stretching ratio to be 1.1x or more is preferred, since this will cause void(s) to be formed within the printing layer. While there is no objection to employment of any value as the upper limit of the range in values for the stretching ratio in the machine direction, as too great a stretching ratio in the machine direction will increase the tendency for fracture to occur during the stretching in the transverse direction that follows, it is preferred that this be 10x or less. It is more preferred that the stretching ratio in the machine direction be 1.2x or more and 9.8x or less, and still more preferred that this be 1.4x or more and 9.6x or less.

3.1.4. Second (Transverse Direction) Stretching

Following first (machine direction) stretching, it is preferred that stretching in the transverse direction be carried out at a stretching ratio of on the order of 2x to 13x at between Tg and Tm + 50°C while in a state such that the two ends in the transverse direction (the direction perpendicular to the machine direction) of the film are gripped by clips within a tenter. Before carrying out stretching in the transverse direction, it is preferred that preheating be carried out, in which case preheating should be carried out until the temperature at the display material or packaging surface reaches between Tg and Tm + 50°C.

It is more preferred that the stretching ratio in the transverse direction be 2.2x or more and 12.8x or less, and still more preferred that this be 2.4x or more and 12.6x or less. Since the stretching rates are different for stretching in the machine direction versus stretching in the transverse direction (the stretching rate is higher for stretching in the machine direction), the preferred stretching ratio ranges are different. It is preferred that the area ratio which is the product of the machine direction stretching and transverse direction stretching ratios be 2.2x or more and 64x.

Following stretching in the transverse direction, it is preferred that the film be made to pass through an intermediate zone in which no procedure such as would cause it to be actively heated is performed. Relative to the zone in which stretching in the transverse direction is carried out at the tenter, since the temperature at the final heat treatment zone that follows is high, failure to establish an intermediate zone would cause heat (hot air itself and/or radiated heat) from the final heat treatment zone to flow into the operation at which stretching in the transverse direction is carried out. In this case, since the temperature in the zone in which stretching in the transverse direction is carried out would not be stable, there would be occurrence of variation in physical properties. It is therefore preferred that following stretching in the transverse direction the film be made to pass through an intermediate zone until a prescribed time has elapsed before final heat treatment is performed. It is important when in this intermediate zone, where rectangular strips are made to hang down from above while the film is kept from passing therethrough, that hot air from the final heat treatment zone and from the zone in which stretching in the transverse direction is carried out as well as any concomitant flow that would otherwise accompany movement of the film be blocked, so that those strips are made to hang down from above in almost perfectly vertical fashion. It will be sufficient if the time of passage through the intermediate zone is on the order of 1 second to 5 seconds. When the time is less than 1 second, length of time in the intermediate zone will be insufficient, and there will be inadequate heat blocking effect. On the other hand, while longer times in the intermediate zone are preferred, since too long a time therein would result in increased equipment size, on the order of 5 seconds will be sufficient.

3.1.5. Heat Treatment

Following passage through the intermediate zone, it is preferred at the heat treatment zone that heat treatment be carried out at between 100° and 280°C. Since heat treatment promotes crystallization of the film, not only will this make it possible to reduce any heat shrinkage that occurred during stretching operation(s), but this will also tend to increase tensile fracture strength. When heat treatment temperature is less than 100°C, this is not preferred since it would tend to increase the heat shrinkage of the film. On the other hand, when heat treatment temperature exceeds 280°C, this is not preferred since the film will tend to melt, and tensile fracture strength will tend to be reduced. It is more preferred that the heat treatment temperature be between 110°C and 270°C, and still more preferred that this be between 120°C and 260°C.

It is preferred that the time of passage through the heat treatment zone be 2 seconds or more and 20 seconds or less. When the time of passage therethrough is 2 seconds or less, heat treatment will be meaningless since the film will pass through the heat treatment zone without the surface temperature of the film having reached the temperature setpoint. Since the longer the time of passage therethrough the greater will be the effect of heat treatment, it is more preferred that this be 5 seconds or more. But since attempting to increase the length of time of passage therethrough would result in increased equipment size, as a practical matter it will be sufficient if this is 20 seconds or less.

During heat treatment, decreasing the distance between tenter clips (causing relaxation in the transverse direction) by some desired ratio will make it possible to reduce heat shrinkage in the transverse direction. For this reason, it is preferred during final heat treatment that the film be made to undergo relaxation in the transverse direction within the range 0% or more and 10% or less (a percent relaxation of 0% indicating that the film is not made to undergo relaxation). Whereas the higher the percent relaxation in the transverse direction the greater will be the reduction in shrinkage in the transverse direction, as the upper limit of the range in values for the percent relaxation (shrinkage of film in the transverse direction immediately following stretching in the transverse direction) is determined by the raw materials used, the conditions under which stretching in the transverse direction was carried out, and the heat treatment temperature, it will not be possible to cause the film to undergo relaxation to the point where this would be exceeded. At a laser printing layer making up a display material in accordance with the present invention, the upper limit of the range in values for the percent relaxation in the transverse direction is 10%. Furthermore, during heat treatment, it is also possible to decrease the distance between clips in the machine direction by some desired ratio (to cause relaxation in the machine direction).

3.1.6. Cooling

Following passage through the heat treatment zone, it is preferred at the cooling zone that a cooling airstream at 10°C or more and 50°C or less be used to carry out cooling of the film for a passage time therethrough of 2 seconds or more and 20 seconds or less.

By thereafter causing the film to be rolled up as portions cut from the two ends thereof are removed therefrom, a film roll is obtained.

3.2. Gas Barrier Layer

A method for fabricating a gas barrier layer that can be arbitrarily provided in the packaging of the present invention will be described below.

The method for forming the gas barrier layer is not particularly limited, and known manufacturing methods can be employed as long as the object of the present invention is not impaired. Among known manufacturing methods, it is preferable to employ a vapor deposition method. Examples of the vapor deposition method include a vacuum vapor deposition method, a sputtering method, a PVD (physical vapor deposition) method such as ion blating, and a CVD (chemical vapor deposition) method. Among these, the vacuum vapor deposition method and the physical vapor deposition method are preferred, and the vacuum vapor deposition method is particularly preferred from the viewpoint of production speed and stability. As a heating mode in the vacuum deposition method, resistance heating, high-frequency induction heating, electron beam heating, or the like can be used. Oxygen, nitrogen, water vapor, or the like may be introduced as a reactive gas, or reactive vapor deposition using means such as ozone addition or ion assist may be used. The film forming conditions may be changed, such as applying a bias to the substrate, raising the temperature of the substrate, or cooling the substrate, as long as the object of the present invention is not impaired.

Here, a method for forming a gas barrier layer by a vacuum deposition method will be described. When a gas barrier layer is formed, the film (laser printing layer and the like) forming the packaging of the present invention is conveyed to a gas barrier layer manufacturing apparatus via a metal roll. As an example of the configuration of the gas barrier layer manufacturing apparatus, the apparatus includes an unwinding roll, a coating drum, a winding roll, an electron beam gun, a crucible, and a vacuum pump. The film is set on the unwinding roll, passes through the coating drum, and is wound around the winding roll. The pressure in the pass line of the film (inside the gas barrier layer manufacturing apparatus) is reduced by the vacuum pump, an inorganic material set in the crucible is vaporized by a beam emitted from the electron gun and deposited onto the film that passes through the coating drum. During the deposition of inorganic material, the film is subjected to heat and tension between the unwinding roll and the winding roll. When the temperature applied to the film is too high, the film undergoes not only great heat shrinkage but also softening, and thus elongation deformation due to tension is likely to occur. Furthermore, it is not preferred since the temperature drop (cooling) of the film after the vapor deposition process is large, the amount of shrinkage after expansion (different from heat shrinkage) is large, the gas barrier layer cracks, and the desired gas barrier properties are less likely to be exerted. It is more preferable as the temperature applied to the film is lower since the deformation of film is suppressed, but the amount of inorganic material vaporized decreases, the thickness of the gas barrier layer thus decreases, and there is a concern that the desired gas barrier properties are not achieved. The temperature applied to the film is preferably 100°C or more and 180°C or less, more preferably 110°C or more and 170°C or less, still more preferably 120°C or more and 160°C or less.

3.3. Overcoat Layer

A method for fabricating an overcoat layer that can be arbitrarily provided in the packaging of the present invention will be described below.

When an overcoat layer is formed, the film (laser printing layer and the like) forming the packaging of the present invention is conveyed to coating equipment via a metal roll. Examples of equipment configuration include an unwinding roll, a coating process, a drying process, and a winding process. At the time of overcoating, the film set on the unwinding roll is subjected to the coating process and the drying process via the metal roll and finally led to the winding roll. The coating method is not particularly limited, and conventionally known methods, such as a gravure coating method, a reverse coating method, a dipping method, a low coating method, an air knife coating method, a comma coating method, a screen printing method, a spray coating method, a gravure offset method, a die coating method, and a bar coating method, can be employed, and the coating method can be appropriately selected according to the desired purpose. Among these, a gravure coating method, a reverse coating method, and a bar coating method are preferred from the viewpoint of productivity. As the drying method, one heating method or a combination of two or more heating methods, such as hot air drying, hot roll drying, high frequency irradiation, infrared irradiation, and UV irradiation, can be used.

In the drying process, the film is heated and also subjected to tension between the metal rolls. When the temperature at which the film is heated in the drying process is too high, the film undergoes not only great heat shrinkage but also softening, elongation deformation due to tension is likely to occur, and the gas barrier layer of the film is likely to crack. Furthermore, it is not preferred since the temperature drop (cooling) of the film after the drying process is large, accordingly the amount of shrinkage after expansion (different from heat shrinkage) is large, the gas barrier layer and the overcoat layer crack, and the desired gas barrier properties are less likely to be achieved. It is more preferable as the temperature at which the film is heated is lower since the deformation of film is suppressed, but the solvent of the coating liquid is less likely to be dried, and there is thus a concern that the desired gas barrier properties are not achieved. The temperature at which the film is heated is preferably 60°C or more and 200°C or less, more preferably 80°C or more and 180°C or less, still more preferably 100°C or more and 160°C or less.

3.5. Bag Making Condition

As a method for making the packaging of the present invention, it is necessary to employ fusion-cut sealing. Fusion-cut sealing is realized, for example, by heat-sealing (side sealing or side welding) the left and right edges of the packaging with heated blades (fusion cutting blades). However, the shape of the packaging is not particularly limited, and an arbitrary shape such as a rectangle, square, or triangle can be employed. The machine and conditions used for fusion-cut sealing are not particularly limited as long as they do not depart from the gist of the present invention, and conventionally known ones can be arbitrarily employed.

As an example of the fusion-cut sealing conditions, the temperature of the fusion cutting blade, the angle of blade edge, and the bag making speed (stroke frequency of the fusion cutting blade) may be cited. Specifically, the temperature of the fusion cutting blade is preferably 300°C or more and 450°C or less. The temperature of the fusion cutting blade varies depending on the melting point of the film used, but is required to be set to a temperature higher than the melting point of the above-described polyester or polyolefin, which is 110°C or more and 300°C or less. It is not preferred that the temperature of the fusion cutting blade is less than 300°C since defective fusion cutting is likely to be caused. It is not preferred that the temperature of the fusion cutting blade exceeds 450°C since the film at the fusion-cut portion is likely to be deformed by heat shrinkage although defective fusion cutting is less likely to be caused. The temperature of the fusion cutting blade is more preferably 310°C or more and 440°C or less, still more preferably 320°C or more and 430°C or less.

The angle of blade edge of the fusion cutting blade is preferably 50° or more and 130° or less with respect to the horizontal direction (direction in which the film flows). It is not preferred that the angle of blade edge is less than 50° or more than 130° since the efficiency of heat transfer to the fusion-cut portion of the film is poor and the fusion-cut sealing strength decreases. The angle of blade edge is more preferably 52° or more and 128° or less, still more preferably 54° or more and 126° or less.

The bag making speed is preferably 60 bags/min or more and 240 bags/min or less. It is not preferred that the bag making speed is less than 60 bags/minute since the productivity of the packaging is extremely diminished. It is not preferred that the bag making speed is 240 bags/min since defective fusion cutting is likely to be caused. The bag making speed is more preferably 65 bags/min or more and 235 bags/min or less, still more preferably 70 bags/min or more and 230 bags/min or less.

3.6. Laser Printing Conditions

As types (wavelengths) of lasers that may be used to carry out laser printing on the packaging in accordance with the present invention, $CO_2$ lasers (10600 nm), YAG lasers (1064 nm), $YVO_4$ lasers (1064 nm), fiber lasers (1064 nm and 1090 nm), green lasers (532 nm), and UV lasers (355 nm) may be cited. Among these, while there is no particular limitation with respect to the type of laser employed at printing of the present invention, $CO_2$ lasers being often used for ablation of plastic, as they are often used for a purpose that is different from printing which is the intention of the present invention, they are not preferred as a laser source. As laser source, YAG lasers, $YVO_4$ lasers, fiber lasers, green lasers, and UV lasers are preferred, YAG lasers, fiber lasers, and UV lasers being more preferred. Commercially available devices may be used for laser printing, representative examples of which that may be cited including the LM-2550 (YAG laser) manufactured by Brother Industrial Printing, Ltd.; the MX-Z2000H-V1 (fiber laser) manufactured by Omron Corporation; the 8028 Trotec Speedy 100 flexx (fiber laser) manufactured by Trotec; the MD-X1000 ($YVO_4$ laser) and the

MD-U1000C (UV laser) manufactured by Keyence Corporation; and so forth.

Regarding laser printing conditions, while the specifications and conditions that may be established will differ for each device manufacturer and for each model, and will moreover differ depending on the film on which printing is to be carried out, for which reason it is impossible to speak to every situation, the following will apply where the MD-U1000C (UV laser; wavelength 355 nm) manufactured by Keyence Corporation is employed by way of example.

It is preferred that laser power be such that output is 20% or more and 80% or less of the maximum 13 W specified for the device. When output is less than 20%, this is not preferred, since printing density will be reduced, and visual perceivability will be reduced. When output is 80% or more, this is not preferred, since this will cause formation of holes in the display body. It is more preferred that output be 25% or more and 75% or less, and still more preferred that this be 30% or more and 70% or less. It is preferred that pulse frequency be 10 kHz or more and 100 kHz or less. When frequency falls below 10 kHz, this is not preferred, since the laser energy per irradiation will be high, and there will be a tendency for the fractional decrease in thickness at the printed portion to rise above 80 vol%. Conversely, when frequency rises above 100 kHz, although this will facilitate causing the fractional decrease in thickness at the printed portion to be 80 vol% or more, there are situations in which this will make it difficult to achieve a difference in color L* value at the printed portion that is 1 or more. It is more preferred that this be 15 kHz or more and 95 kHz or less, and still more preferred that this be 20 kHz or more and 90 kHz or less. It is preferred that scan speed be 10 mm/sec or more and 3000 mm/sec or less. When scan speed falls below 10 mm/sec, this is not preferred since the fact that printing speed will be extremely low will cause the display body production rate to be reduced. On the other hand, when scan speed rises above 3000 mm/sec, this is not preferred since printing density will be reduced and it will be difficult to achieve a difference in color L* value that is 1 or more. It is more preferred that scan speed be 100 mm/sec or more and 2900 mm/ or less, and still more preferred that this be 200 mm/sec or more and 2800 mm/ or less.

Working Examples

Next, although the present invention is described below in more specific terms by way of working examples and comparative examples, the present invention is not to be limited in any way by the modes employed in such working examples, it being possible for changes to be made as appropriate without departing from the gist of the present invention.

<Polyolefin Raw Material>

<Polyolefin A>

As Polyolefin A, FS2011DG3 (manufactured by Sumitomo Chemical Co., Ltd.), which was homopolypropylene, was used.

<Polyolefin B>

As Polyolefin B, SPX78J1 (manufactured by Sumitomo Chemical Co., Ltd.), which was a propylene/butene-1 copolymer (copolymerization ratio: 25 mol%), was used.

<Polyolefin C>

Polyolefin C was obtained by kneading CaCOs and $TiO_2$ as laser printing pigments into Polyolefin A at 30% by mass and 5% by mass, respectively.

<Polyolefin D>

Polyolefin D was obtained by kneading TOMATEC COLOR42-920A (main component $Bi_2O_3$, manufactured by TOMATEC CO., LTD.) as a laser pigment into Polyolefin A at 5% by mass.

<Polyolefin E>

Polyolefin E was obtained by kneading 15,000 ppm of $SiO_2$ as a lubricant into Polyolefin A.

<Polyester Raw Materials>

[Polyester A]

As Polyester A, RE553 (manufactured by TOYOBO CO., LTD.), which was homopolyethylene terephthalate, was used.

[Polyester B]

As Polyester B, SR173 (manufactured by TOYOBO CO., LTD.), which was a neopentyl glycol copolymer (copolymerization ratio 30 mol%), was used.

[Polyester C]

As Polyester C, Polyester C was obtained by kneading $TiO_2$ into Polyester A at 50% by mass.

[Polyester D]

As Polyester D, Polyester D was obtained by kneading TOMATEC COLOR42-920A (main component $Bi_2O_3$, manufactured by TOMATEC CO., LTD.) as a laser pigment into Polyester A at 5% by mass.

[Polyester E]

As Polyester E, RE555 (manufactured by TOYOBO CO., LTD.), in which 7000 ppm of $SiO_2$ was kneaded into homopolyethylene terephthalate, was used.

Respective polyolefin raw material and polyester raw material compositions are shown in Table 1.

[Table 1]

| Name of raw material | Resin type | Laser printing pigment | | Other additives | |
|---|---|---|---|---|---|
| | | Type | Amount added | Type | Amount added |
| Polyolefin A | Polypropylene | Absence | - | Absence | - |
| Polyolefin B | Propylene-butene copolymer | Absence | - | Absence | - |
| Polyolefin C | Polypropylene | $CaCO_3$ | 60 wt% | Absence | - |
| Polyolefin D | Polypropylene | $Bi_2O_3$ | 5 wt% | Absence | - |
| Polyolefin E | Polypropylene | Absence | - | SiO2 | 15000 ppm |
| Polyester A | polyethylene terephthalate | Absence | - | Absence | - |
| Polyester B | Neopentyl glycol copolymer | Absence | - | Absence | - |
| Polyester C | polyethylene terephthalate | $TiO_2$ | 50 wt% | Absence | - |
| Polyester D | polyethylene terephthalate | $Bi_2O_3$ | 5 wt% | Absence | - |
| Polyester E | polyethylene terephthalate | Absence | - | $SiO_2$ | 7000 ppm |

[Working Example 1]

Polyolefin A, Polyolefin D, and Polyolefin E as raw materials for Layer A were mixed at a mass ratio of 92 : 3 : 5; Polyolefin B and Polyolefin E as raw materials for Layer B were mixed at a mass ratio of 95 : 5.

The raw materials mixed for Layer A and Layer B were respectively fed into different screw-type extruders, melted, and extruded from a T die. A feedblock was used partway along the flow paths of the respective molten resins so as to cause them to be joined, and this was expelled from a T die and taken up as it was cooled on a chill roll, the surface temperature of which was set to 30°C, to obtain an unstretched laminated film. The amount of the laminated film expelled was adjusted so that the thickness ratio of Layer A to Layer B was 95/5.

The unstretched laminated film, which was obtained through cooling and solidification, was guided to a machine direction stretching device in which a plurality of groups of rolls were arranged in continuous fashion, and this was made to undergo preheating on preheating rolls until the film temperature reached 125°C, following which this was stretched by a factor of 3.8x.

Following machine direction stretching, the film was guided to a transverse direction stretching device (tenter), where it was made to undergo preheating for 8 seconds until the surface temperature thereof reached 155°C, following which it was stretched by a factor of 8.6x in the transverse direction (horizontal direction). Following transverse direction stretching, the film was guided while still in that state to an intermediate zone, being made to pass therethrough in 1.0 second. While in the intermediate zone of the tenter, where rectangular strips were made to hang down from above while the film was kept from passing therethrough, hot air from the heat treatment zone and hot air from the zone in which stretching in the transverse direction was carried out was blocked, so that those strips were made to hang down from above in almost perfectly vertical fashion.

Thereafter, following passage through the intermediate zone, the film was guided to the heat treatment zone, where heat treatment was carried out for 9 seconds at 160°C. At this time, at the same time that heat treatment was being carried out, the distance between clips in the transverse direction of the film was reduced, causing this to undergo 3% relaxation treatment in the transverse direction. Following passage through the final heat treatment zone, the film was cooled for 5 seconds in a cooling airstream at 30°C. Portions were cut and removed from the two edges thereof and this was rolled up into a roll 600 mm in width to continuously manufacture a prescribed length of biaxially stretched film of thickness 30 um.

The film was unwound from the obtained film roll and continuously folded in half using a folding machine such that Layers B overlapped each other and the creases were along the machine direction. This half-folded film was guided to a fusion-cut sealing machine (manufactured by KYOEI PRINTING MACHINE CO., LTD.: Model PP500), and continuously sealed by fusion cutting along the transverse direction of the film to fabricate A4-sized packaging (210 mm in the machine direction $\times$ 300 mm in the transverse direction). The fusion-cut sealing conditions were as follows: a fusion cutting blade temperature of 400°C, an angle of blade edge of 60°, and a bag making speed of 120 bags/min.

"12345ABCDE" was printed in the center of the film of the obtained packaging at a pulse frequency of 30 kHz, a scanning speed of 1500 mm/min, and an output of 80% using a fiber laser with a wavelength of 1064 nm (Laser Marker 8028 Trotec Speedy 100 flexx manufactured by Trotec) to fabricate a display body. The size per character was approximately 8 mm in height $\times$ approximately 5 mm in width.

Table 2 shows the manufacturing conditions and the evaluation results of the fabricated packaging with laser printing.

[Working Examples 2 to 4]

In Working Examples 2 to 4 as well, packaging with various conditions changed was fabricated in the same manner as in Working Example 1. Table 2 shows the manufacturing conditions with laser printing and the evaluation results in the respective Examples.

[Comparative Example 1]

A laser printing layer was formed by continuously coating one surface of PYLEN Film (registered trademark) P5562-30 um (manufactured by TOYOBO CO., LTD.), which was a polypropylene film, with a white ink layer using a gravure roll, whereby a laminated body was obtained. The white ink layer was fabricated by mixing methyl ethyl ketone, isopropyl alcohol, polyurethane, and $TiO_2$ at a ratio of 11% : 30 : 38% : 48% by mass. The thickness of the laser printing layer was 3 um. Portions were cut and removed from the two edges of the laminated body, and the laminated body was rolled up into a roll 600 mm in width to continuously manufacture a prescribed length of film of thickness 33 um.

The film was unwound from the obtained film roll and continuously folded in half using a folding machine such that the $TiO_2$-coated surfaces overlapped each other and the creases were along the machine direction. This half-folded film was guided to a fusion-cut sealing machine (manufactured by KYOEI PRINTING MACHINE CO., LTD.: Model PP500), and continuously sealed by fusion cutting along the transverse direction of the film to fabricate A4-sized packaging (210 mm in the machine direction $\times$ 297 mm in the transverse direction). The fusion-cut sealing conditions were as follows: a fusion cutting blade temperature of 400°C, an angle of blade edge of 60°, and a bag making speed of 120 bags/min.

"12345ABCDE" was printed in the center of the film of the obtained packaging at a pulse frequency of 40 kHz, a scanning speed of 2000 mm/min, and an output of 30% using a UV laser with a wavelength of 355 nm (Laser Marker MD-U1000C manufactured by Keyence Corporation). The size per character was approximately 3 mm in height $\times$ approximately 3 mm in width.

Table 2 shows the manufacturing conditions and the evaluation results of the fabricated packaging with laser printing.

[Comparative Example 2]

The laminated body coated with TiO$_2$, which was obtained in the same manner as in Comparative Example 1, was continuously folded in half using a folding machine such that the opposite sides to the TiO$_2$-coated surfaces overlapped each other and the creases were along the machine direction, and fusion-cut sealing and laser printing were performed in the same manner as in Comparative Example 1. Table 2 shows the manufacturing conditions and the evaluation results of the fabricated packaging with laser printing.

[Comparative Example 3]

The laminated body was continuously folded in half using a folding machine such that the one surfaces of PYLEN Film (registered trademark) P5562-30 um (manufactured by TOYOBO CO., LTD.), which was a polypropylene film, overlapped each other and the creases were along the machine direction, and fusion-cut sealing and laser printing were performed in the same manner as in Comparative Example 1. Table 2 shows the manufacturing conditions and the evaluation results of the fabricated packaging with laser printing.

<Evaluation Method of Packaging>

The evaluation methods of packaging are as follows. For samples of the non-printed portion, the samples used were cut out from portions that were 1 mm or more away from any printed portion or fusion-cut sealing portion.

[Thickness]

The thickness was measured at five points using a micrometer (Millitron 1254D manufactured by Feinpruf GmbH), and the average value thereof was determined.

[Color L* Value (printed portion and non-printed portion)]

A spectroscopic color difference meter (ZE-6000; manufactured by Nippon Denshoku Industries Co., Ltd.) was used in reflection mode to respectively measure the color L* values at the printed portion and the non-printed portion of a single film sample. The specific method used for measurement of the printed portion was as follows.
From the characters "12345ABCDE" printed as, a square sample which was 3 cm on a side was cut so as to contain the entirety of the "B" (it being considered acceptable at this time if character(s) other than the "B" also happened to be contained therein), and this was measured. Furthermore, the light source for measurement at the color difference meter employed a 6φ stage (the aperture on which light for measurement fell being approximately 1 cm in diameter) and a 6φ eyepiece, the aperture of the stage being arranged so as to contain the character "B" therewithin. In a case where printing was not completely contained within (i.e., protruded from) stage aperture, it was considered acceptable to change stage as necessary (e.g., 10φ, 30φ, etc.). Even where printing protruded therefrom, so long as a portion of printing was contained within stage aperture and light for measurement fell thereon, this was considered to be acceptable.
Furthermore, for the non-printed portion, a square sample which was 3 cm on a side was cut from the portion at which printing had not been carried out, and color L* values were measured using 6φ components at the stage and eyepiece of the color difference meter. It was considered acceptable to change the stage and/or eyepiece of the color difference meter to 10φ, 30φ, or the like as necessary, in which case it was considered acceptable to employ a sample size of arbitrary size so long as it was such as to cause the aperture of the stage to be covered (i.e., so long as it did not allow light for measurement to leak past it).

[Fusion-Cut Sealing Strength]

A total of 10 samples having a size of 15 mm in the direction (sample width) along the fusion-cut sealing line and 100 mm in the direction (tension direction) perpendicular to the sample width from the fusion-cut sealed portion (300 mm on one side × 2 = 600 mm on both sides) were sampled from arbitrary positions of the packaging. In conformity with JIS Z1707, this sample was opened 180 degrees and both ends thereof were set in a universal tensile tester "Autograph AG-Xplus" (manufactured by Shimadzu Corporation). A tensile test was performed at a distance between chucks of 50 mm and a tensile speed of 200 mm/min, and the peel strength was measured when the fusion-cut sealing portion was fractured. The maximum value of the peel strength was taken as the fusion-cut sealing strength, and the strength per 15 mm sample width (N/15 mm) was recorded, and the average value for 10 samples was taken as the average value of fusion-cut sealing strength.
When the sample cannot be cut out with a length of 100 mm or more due to limitations on the size of the packaging, the length may be 100 mm or less (for example, 50 mm). In this case, the distance between chucks may be set to 50 mm or less (for example, the distance between chucks is 40 mm in a case where the sample length is 50 mm) as long as the chuck on one side is provided with at least a length of 5 mm or more for gripping the sample.

[Printing Size]

Among the characters "12345ABCDE" printed as, a stainless steel straightedge ruler (TZ-RS15 manufactured by Kokuyo Co., Ltd.) was used to measure by visual inspection in increments of 0.5 mm the heights and widths of those at "345ABC", the average thereof being taken to be the printing size. Where the printing size was less than 0.5 mm, an RH-2000 digital microscope manufactured by Hirox Co., Ltd., was separately used to measure the printing size. Software provided with RH-2000 digital microscope manufactured by Hirox Co., Ltd., was used for measurement of the printing size.

[Heat Shrinkage Rate]

The film was cut into a square of 10 cm × 10 cm and exposed to hot air at 120°C for 30 minutes without a load for shrinkage, then the dimensions in the machine and transverse directions of the film were measured, and the shrinkage rate in each direction was determined according to the following Equation 1. The measurement was performed 2 times and the average value thereof was determined.

$$\text{Shrinkage rate} = \{(\text{Length before shrinkage} - \text{Length after shrinkage})/\text{Length before shrinkage}\} \times 100(\%)$$

Equation 1

[Tensile Fracture Strength]

Strip-like film samples which were 140 mm in the measurement direction and 20 mm in the direction (transverse direction of the film) perpendicular to the measurement direction were prepared in accordance with JIS K7113. An "Autograph AG-Xplus" universal tensile tester (manufactured by Shimadzu Corporation) was used, the two ends of the test piece being held such that a 20 mm length thereof was gripped by a chuck at either end (chuck separation 100 mm), tensile testing being carried out under conditions of 23° C ambient temperature and 200 mm/min elongation rate, strength (stress) at the time of tensile fracture being taken to be the tensile fracture strength (MPa). The machine direction and the transverse direction were used as measurement directions.

[Visual Evaluation of Printed Portion]

Visual perceptibility of the characters "12345ABCDE" that were printed on the laminated body was judged based on the following criteria.

GOOD: Characters were recognizable as a result of visual inspection
BAD: Characters were unrecognizable as a result of visual inspection

[Abrasion Resistance of Printed Portion]

Using a simple abrasion resistance tester (Model IMC-1557, Imoto machinery Co., LTD.), the abrasion resistance of the printed portion on the outer surface of the packaging was evaluated. A sample of 150 mm × 150 mm was cut from the packaging so that the printed portion was included, and used as a measurement sample. The sample was set in the abrasion resistance tester so that the printed portion on the outer surface of the packaging touched the steel wool, and the printed portion was rubbed with steel wool 50 times at a reciprocation distance of 10 cm and a speed of 15 sec/10 times. The yarn number of steel wool was #0000 and the weight was 1 kg. As for the display body of Reference Example, an arbitrary part of the characters describing the expiration date was subjected to the measurement.

The printed portion after being rubbed with steel wool was evaluated by visual inspection according to the following criteria.

GOOD: Characters were recognizable as a result of visual inspection (characters were not defaced by friction)
BAD: Characters were unrecognizable as a result of visual inspection (characters were defaced by friction)

[Table 2A]

| | | | Working Example 1 | Working Example 2 | Working Example 3 | Working Example 4 | Comparative Example 1 | Comparative Example 2 | Comparative Example 3 |
|---|---|---|---|---|---|---|---|---|---|
| Film forming condition | Raw material composition of layer A [mass%] | Polyolefin A | 92 | 0 | 0 | 0 | P5562 coated with TiO2 | P5562 coated with TiO2 | P5562 single body |
| | | Polyolefin B | 0 | 0 | 0 | 0 | | | |
| | | Polyolefin C | 0 | 97 | 0 | 0 | | | |
| | | Polyolefin D | 3 | 0 | 0 | 0 | | | |
| | | Polyolefin E | 5 | 3 | 0 | 0 | | | |
| | | Polyester A | 0 | 0 | 20 | 70 | | | |
| | | Polyester B | 0 | 0 | 70 | 5 | | | |
| | | Polyester C | 0 | 0 | 0 | 20 | | | |
| | | Polyester D | 0 | 0 | 3 | 0 | | | |
| | | Polyester E | 0 | 0 | 7 | 5 | | | |
| | Raw material composition of layer B [mass%] | Polyolefin A | 0 | 0 | - | 0 | | | |
| | | Polyolefin B | 95 | 95 | - | 0 | | | |
| | | Polyolefin C | 0 | 0 | - | 0 | | | |
| | | Polyolefin D | 0 | 0 | - | 0 | | | |
| | | Polyolefin E | 5 | 5 | - | 0 | | | |
| | | Polyester A | 0 | 0 | - | 10 | | | |
| | | Polyester B | 0 | 0 | - | 83 | | | |
| | | Polyester C | 0 | 0 | - | 0 | | | |
| | | Polyester D | 0 | 0 | - | 0 | | | |
| | | Polyester E | 0 | 0 | - | 7 | | | |
| | Laser pigment of layer A | Type | $Bi_2O_3$ | $TiO_2$/$CaCO_3$ | $Bi_2O_3$ | $TiO_2$ | | | |
| | | Amount added [wt%] | 0.15 | 5/30 | 0.15 | 10 | | | |

| | | | Working Example 1 | Working Example 2 | Working Example 3 | Working Example 4 | Comparative Example 1 | Comparative Example 2 | Comparative Example 3 |
|---|---|---|---|---|---|---|---|---|---|
| | Laser pigment of layer B | Type | Absence | Absence | Absence | Absence | | | |
| | | Amount added [wt%] | - | - | - | - | | | |
| | Layer configuration | | A/B | A/B | A | A/B | | | |
| | Thickness ratio among respective layers [vol%] | | 95/5 | 95/5 | 100 | 50/50 | | | |
| | Stretching in machine direction (machine direction stretching) | Temperature for stretching [°C] | 125 | 125 | 90 | 95 | | | |
| | | Stretching ratio | 3.8 | 4.5 | 3.8 | 3.1 | | | |
| | Stretching in transverse direction (transverse direction stretching) | Temperature for stretching [°C] | 155 | 160 | 115 | 110 | | | |
| | | Stretching ratio | 8.6 | 9.8 | 3.8 | 3.5 | | | |
| | Heat Treatment | Temperature [°C] | 160 | 165 | 160 | 220 | | | |
| | | Relaxation rate (transverse direction) [%] | 3 | 5 | 7 | 6 | | | |
| | Thickness [um] | Total | 30 | 40 | 30 | 20 | 30 | 30 | 30 |
| | | Laser Printing Layer | 28.5 | 38 | 30 | 10 | 3 | 3 | 0 |

EP 4 317 011 A1

[Table 2B]

| | | | Working Example 1 | Working Example 2 | Working Example 3 | Working Example 4 | Comparative Example 1 | Comparative Example 2 | Comparative Example 3 |
|---|---|---|---|---|---|---|---|---|---|
| Bag Making Condition | Fusion-cut surface | | Layer B | Layer B | - | Layer B | TiO$_2$ surface | Opposite surface to TiO$_2$ | - |
| | Hot blade temperature [°C] | | 400 | 420 | 410 | 410 | 400 | 400 | 400 |
| | Angle of blade edge [°] | | 60 | 60 | 65 | 65 | 60 | 60 | 60 |
| | Bag making speed [bags/min] | | 120 | 120 | 140 | 120 | 120 | 120 | 120 |
| Laser irradiation condition | Laser source | | Fiber | UV | UV | Fiber | UV | UV | UV |
| | Pulse frequency [kHz] | | 30 | 40 | 40 | 45 | 40 | 40 | 40 |
| | Scanning speed [mm/min.] | | 1500 | 2000 | 2000 | 800 | 2000 | 2000 | 2000 |
| | Output [%] | | 80 | 30 | 30 | 30 | 30 | 30 | 30 |
| Properties of fusion-cut bag | Printing size | Height [mm] | 8 | 1 | 5 | 4 | 3 | 4 | - |
| | | Width [mm] | 5 | 1 | 5 | 4 | 3 | 4 | - |
| | Color L* value | Printed portion (laser-irradiated portion) | 83.9 | 95.7 | 85.6 | 94.5 | 83.9 | 82.1 | 94.2 |
| | | Non-printed portion | 92.5 | 97.4 | 93.4 | 97.2 | 87.5 | 86.1 | 94.2 |
| | | Difference | 8.6 | 1.7 | 7.8 | 2.7 | 3.6 | 4 | 0 |
| | Fusion-cut sealing strength [N/15 mm] | | 28 | 17 | 21 | 8 | 2 | 18 | 20 |
| | Heat shrinkage rate [%] | Machine direction | 4.3 | 3.2 | 7.9 | 1.2 | 3.6 | 3.8 | 3.6 |
| | | Transverse direction | 1.2 | 2.1 | 7.6 | 0.9 | 1 | 0.5 | 0.7 |
| | Tensile fracture strength [MPa] | Machine direction | 117 | 125 | 160 | 178 | 120 | 118 | 119 |
| | | Transverse direction | 278 | 289 | 188 | 191 | 301 | 305 | 303 |
| | Visual evaluation of printed portion (visual perceivability) | | Good | Good | Good | Good | Good | Good | Bad |
| | Abrasion resistance of printed portion (outer surface of packaging) | | Good | Good | Good | Good | Good | Bad | - |

[Manufacturing Conditions and Evaluation Results of Film]

All of the packaging of Working Examples 1 to 4 were excellent in the physical properties shown in Table 2.

On the other hand, in Comparative Example 1, since the $TiO_2$-coated surface was sealed by fusion cutting, the packaging was inferior in fusion-cut sealing strength.

In Comparative Example 2, since the $TiO_2$-coated surface was the outer surface of the packaging, the laser printing after abrasion were unrecognizable, and the packaging was not preferable as laser-printed packaging.

In Comparative Example 3, since a laser printing pigment was not contained, the packaging could not be laser-printed.

INDUSTRIAL APPLICABILITY

The laser-printed packaging of the present invention can provide packaging that has a laser-printed portion unaccompanied by peeling off and is formed by fusion-cut sealing with high productivity and economic efficiency.

**Claims**

1. Packaging comprising:

   at least one laser printing layer printable by laser irradiation,
   wherein the laser printing layer includes a laser-printed portion printed by laser and a non-printed portion, at least a part of the packaging is sealed by fusion cutting, and the packaging meets the following requirements of (1) to (3):

   (1) a thickness of the laser printing layer is 5 pm or more and 200 pm or less;
   (2) a difference in color L* value between the laser-printed portion and the non-printed portion is 1.0 or more and 10 or less; and
   (3) a fusion-cut sealing strength is 5 N/15 mm or more and 40 N/15 mm or less.

2. The packaging according to claim 1, wherein either a height or width of printing size in the laser-printed portion is 0.2 mm or more and 100 mm or less.

3. The packaging according to claim 1 or 2, wherein the laser printing layer is provided over a whole region of a plane of the packaging.

4. The packaging according to any one of claims 1 to 3, wherein the laser printing layer contains single substances or compounds of one or more selected from the group consisting of bismuth, gadolinium, neodymium, titanium, antimony, tin, aluminum, calcium, and barium as a laser printing pigment.

5. The packaging according to any one of claims 1 to 4, wherein a resin constituting the laser printing layer is mainly any of polyester, polypropylene, or polyethylene.

## INTERNATIONAL SEARCH REPORT

| International application No. |
| --- |
| **PCT/JP2022/009487** |

**A.  CLASSIFICATION OF SUBJECT MATTER**

*B65D 65/40*(2006.01)i; *B32B 27/00*(2006.01)i; *B32B 27/20*(2006.01)i; *B65D 33/00*(2006.01)i
FI:    B65D65/40 D; B65D33/00 A; B32B27/00 H; B32B27/20 A

According to International Patent Classification (IPC) or to both national classification and IPC

**B.  FIELDS SEARCHED**

Minimum documentation searched (classification system followed by classification symbols)

B65D65/40; B32B1/00-43/00; B65D33/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| Y | JP 2010-274530 A (DAINIPPON PRINTING CO., LTD.) 09 December 2010 (2010-12-09) claims, paragraphs [0020]-[0050], examples | 1-5 |
| Y | JP 2020-146963 A (DAINIPPON PRINTING CO., LTD.) 17 September 2020 (2020-09-17) claims, paragraphs [0003], [0007], [0012]-[0037], [0043]-[0051] | 1-5 |
| Y | WO 2021/005893 A1 (TOYOBO CO., LTD.) 14 January 2021 (2021-01-14) paragraphs [0002], [0014], [0040], [0061], examples | 1-5 |
| Y | WO 2019/239953 A1 (TOYOBO CO., LTD.) 19 December 2019 (2019-12-19) paragraphs [0007], [0011], [0023], [0055], [0079], examples | 1-5 |
| A | JP 2015-123616 A (AJINOMOTO CO., INC.) 06 July 2015 (2015-07-06) | 1-5 |
| P, A | WO 2021/241274 A1 (TOYOBO CO., LTD.) 02 December 2021 (2021-12-02) | 1-5 |

☐ Further documents are listed in the continuation of Box C.          ☑ See patent family annex.

| | |
| --- | --- |
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **21 April 2022** | **17 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/009487**

| Patent document cited in search report | | | Publication date (day/month/year) | Patent family member(s) | | Publication date (day/month/year) |
|---|---|---|---|---|---|---|
| JP | 2010-274530 | A | 09 December 2010 | (Family: none) | | |
| JP | 2020-146963 | A | 17 September 2020 | (Family: none) | | |
| WO | 2021/005893 | A1 | 14 January 2021 | TW 202110646 | A | |
| WO | 2019/239953 | A1 | 19 December 2019 | US 2021/0229410 A1 paragraphs [0008], [0026], [0053], [0091], [0123], examples EP 3808682 A1 KR 10-2021-0020940 A CN 112218803 A TW 202012487 A | | |
| JP | 2015-123616 | A | 06 July 2015 | (Family: none) | | |
| WO | 2021/241274 | A1 | 02 December 2021 | (Family: none) | | |

Form PCT/ISA/210 (patent family annex) (January 2015)

## REFERENCES CITED IN THE DESCRIPTION

**Patent documents cited in the description**

- JP 6736976 B

- JP 6268873 B